# EUROPÄISCHE PATENTANMELDUNG

(11) **EP 4 838 313 A1**
(43) Veröffentlichungstag der Anmeldung: **11.11.2026**
(21) Anmeldenummer: 25174212.8
(22) Anmeldetag: 05.05.2025
(51) Int. Cl.: G05B 13/02, G06N 3/08

(54) **VERFAHREN UND MASCHINENSTEUERUNG ZUM STEUERN EINER MASCHINE**

(71) Anmelder: Siemens Aktiengesellschaft, 80333 München (DE)
(72) Erfinder: Limmer, Steffen, 80636 München (DE); Weber, Marc Christian, 80339 München (DE); Heesche, Kai, 81539 München (DE); Hein, Daniel, 81549 München (DE); Otte, Clemens, 81739 München (DE); Sterzing, Volkmar, 85579 Neubiberg (DE); Strixner, Ferdinand, 81739 München (DE)
(74) Vertreter: Siemens Patent Attorneys

(57) **Zusammenfassung**

Ein lernbasierter Steuerungsagent (POL) ist darauf trainiert, infolge einer Einspeisung von Betriebsdaten (BD) der Maschine (M) sowie eines Zieleinstellungswerts (X) ein hinsichtlich eines Performanzziels (PT1, PT2, ...) der Maschine optimiertes Steuersignal (CS) zum Steuern der Maschine auszugeben. Dabei sind durch den Zieleinstellungswert (X) viele verschiedene Performanzziele (PT1, PT2, ...) einstellbar. Erfindungsgemäß wird eine Vielzahl verschiedener Zieleinstellungswerte (X) generiert. Weiterhin werden aktuelle Betriebsdaten (BD) der Maschine erfasst und zusammen mit einem jeweiligen Zieleinstellungswert (X) in den Steuerungsagenten (POL) eingespeist. Die Maschine wird dann mittels eines jeweils vom Steuerungsagenten (POL) ausgegebenen Steuersignals (CS) gesteuert. Darüber hinaus wird für verschiedene Zieleinstellungswerte (X) jeweils eine den einzelnen Performanzzielen (PT1, PT2, ...) übergeordnete Performanz der Maschine ermittelt. Schließlich wird ein die übergeordnete Performanz optimierender Zieleinstellungswert (OX) ermittelt und im weiteren Betrieb der Maschine verwendet.

## Beschreibung

Bei der Steuerung komplexer Maschinen, wie z.B. Robotern, Motoren, Fertigungsanlagen, Werkzeugmaschinen, Fräsmaschinen, Gasturbinen, Windturbinen, Kühlanlagen, Heizungsanlagen oder Verbrennungskraftmaschinen werden zunehmend datengetriebene Verfahren des maschinellen Lernens eingesetzt.

Mittels derartiger Lernverfahren kann eine Maschinensteuerung darauf trainiert werden, für einen jeweiligen Betriebszustand der Maschine eine zustandsspezifische Steueraktion zum Steuern der Maschine zu generieren, die spezifisch ein gewünschtes oder optimiertes Verhalten der Maschine bewirkt und damit deren Performanz optimiert. Ein lernbasiertes Verfahren, durch das eine im aktuellen Zustand anzuwendende Steueraktion ausgewählt wird, wird häufig auch als Policy, Steuerungsagent oder Aktionsauswahlregel bezeichnet.

Zum Trainieren eines solchen lernbasierten Steuerungsagenten steht eine Vielzahl bekannter Trainingsverfahren, wie z.B. Verfahren des bestärkenden Lernens zur Verfügung. Ein bestärkendes Lernen wird häufig auch als Reinforcement-Learning bezeichnet.

Im laufenden Betrieb einer Maschine tritt häufig das Problem auf, dass sich deren Betriebsbedingungen langsam oder in unvorhergesehener Weise ändern, beispielsweise durch Alterung oder durch Witterungseinflüsse. Insofern derartige Einflüsse beim Training eines Steuerungsagenten oft noch nicht bekannt, nicht vorhersehbar oder in den verfügbaren Trainingsdaten unterrepräsentiert sind, agiert ein solcher Steuerungsagent ohne spezifische Anpassung in vielen Fällen zunehmend suboptimal.

Zur Anpassung an geänderte Betriebsbedingungen kann der Steuerungsagent zwar nachtrainiert werden, doch ist ein solches Nachtraining häufig mit einem hohen Rechenaufwand verbunden.

Es ist Aufgabe der vorliegenden Erfindung, ein Verfahren sowie eine Maschinensteuerung zum Steuern einer Maschine anzugeben, die eine weniger aufwendige Anpassung der Maschinensteuerung erfordern.

Gelöst wird diese Aufgabe durch ein Verfahren mit den Merkmalen des Patentanspruchs 1, durch eine Maschinensteuerung mit den Merkmalen des Patentanspruchs 9, durch ein Computerprogrammprodukt mit den Merkmalen des Patentanspruchs 10 sowie durch ein computerlesbares Speichermedium mit den Merkmalen des Patentanspruchs 11.

Zum Steuern einer Maschine wird ein lernbasierter Steuerungsagent bereitgestellt, der darauf trainiert ist, infolge einer Einspeisung von Betriebsdaten der Maschine sowie eines Zieleinstellungswerts ein hinsichtlich eines Performanzziels der Maschine optimiertes Steuersignal zum Steuern der Maschine auszugeben. Dabei sind durch den Zieleinstellungswert eine Vielzahl verschiedener Performanzziele einstellbar. Der Zieleinstellungswert kann hierbei insbesondere skalar oder vektorwertig sein. Falls mehrere diskrete Performanzziele, wie z.B. ein Wirkungsgrad und ein Schadstoffausstoß vorgegeben sind, können diese insbesondere durch einzelne Vektorelemente eines vektorwertigen Zieleinstellungswerts gewichtet werden. Auf diese Weise kann mittels des Zieleinstellungswerts zwischen mehreren diskreten Performanzzielen interpoliert werden, um so einen quasikontinuierlichen Raum von möglichen Performanzzielen zu parametrisieren und ein in einer spezifischen Betriebssituation günstiges Performanzziel feingranular einzustellen. Erfindungsgemäß wird eine Vielzahl verschiedener Zieleinstellungswerte generiert. Ferner werden aktuelle Betriebsdaten der Maschine erfasst und zusammen mit einem jeweiligen der generierten Zieleinstellungswerte in den Steuerungsagenten eingespeist, und die Maschine wird mittels eines jeweils vom Steuerungsagenten ausgegebenen Steuersignals gesteuert. Weiterhin wird für verschiedene Zieleinstellungswerte jeweils eine den einzelnen Performanzzielen übergeordnete Performanz der Maschine ermittelt. Schließlich wird ein die übergeordnete Performanz optimierender Zieleinstellungswert ermittelt und in einem weiteren Betrieb der Maschine verwendet.

Die übergeordnete Performanz kann dabei insbesondere Betriebsbedingungen, Betriebszustände und/oder Performanzziele betreffen, die beim Training des Steuerungsagenten noch nicht relevant oder nicht zugänglich waren, beispielsweise witterungsbedingte oder alterungsbedingte Fehlfunktionen. So kann als übergeordnete Performanz z.B. gemessen werden, wie oft im aktuellen Betrieb Fehlfunktionen auftreten, wie oft Grenzwerte verletzt werden und/oder in welchem Maße Grenzwerte verletzt werden. Die übergeordnete Performanz kann skalar oder vektorwertig sein.

Zum Ausführen des erfindungsgemäßen Verfahrens sind eine Maschinensteuerung, ein Computerprogrammprodukt sowie ein vorzugsweise nichtflüchtiges computerlesbares Speichermedium vorgesehen.

Das erfindungsgemäße Verfahren sowie die erfindungsgemäße Maschinensteuerung können beispielsweise mittels eines oder mehrerer Prozessoren ausgeführt bzw. implementiert werden. Insbesondere mittels anwendungsspezifischer integrierter Schaltungen (ASIC), digitaler Signalprozessoren (DSP) und/oder sogenannter "Field Programmable Gate Arrays" (FPGA). Darüber hinaus kann das erfindungsgemäße Verfahren zumindest teilweise in einer Cloud und/oder in einer Edge-Computing-Umgebung ausgeführt werden.

Ein Vorteil der Erfindung ist insbesondere darin zu sehen, dass die Steuerung der Maschine im laufenden Betrieb und ohne aufwändiges Nachtraining des Steuerungsagenten an Änderungen von Betriebsbedingungen und/oder Performanzzielen angepasst werden kann, die beim Training des Steuerungsagenten noch nicht absehbar waren.

In vielen Fällen kann ein einmal trainierter Steuerungsagent unverändert weiterbetrieben werden, was insbesondere bei sicherheitskritischen Anwendungen ein wesentlicher Vorteil sein kann.

Darüber hinaus kann die Erfindung lokal ausgeführt oder angewandt werden. Eine Cloud- oder Netzwerk-Anbindung ist häufig nicht erforderlich.

Insofern mittels der Erfindung eine übergeordnete Performanz optimierbar ist, kann die Erfindung in vorteilhafter Weise im Rahmen bekannter hierarchischer Optimierungsverfahren genutzt werden.

Ferner können durch eine Analyse von im Zeitverlauf ermittelten optimierenden Zieleinstellungswerten Hinweise über die Beiträge der einstellbaren Performanzziele zur übergeordneten Performanz gewonnen werden. Derartige Hinweise können in vielen Fällen dazu genutzt werden, Sicherheitsgrenzen in performanzzielspezifischer Weise zu aktualisieren. Darüber hinaus können solche Hinweise zur Beurteilung eines Gesundheitszustands der Maschine oder für eine vorausschauende Wartung genutzt werden.

Vorteilhafte Ausführungsformen und Weiterbildungen der Erfindung sind in den abhängigen Ansprüchen angegeben.

Nach einer vorteilhaften Ausführungsform der Erfindung kann der Steuerungsagent vorab trainiert werden, indem
- ein Performanzbewerter bereitgestellt wird, bei dem verschiedene Performanzziele der Maschine einstellbar sind,
- eine Vielzahl von Trainings-Zieleinstellungswerten generiert wird,
- Betriebsdaten der Maschine zusammen mit einem jeweiligen der Trainings-Zieleinstellungswerte in den Steuerungsagenten eingespeist werden, wobei parallel dazu durch den jeweiligen Trainings-Zieleinstellungswert ein jeweiliges Performanzziel beim Performanzbewerter eingestellt wird,
- durch den Performanzbewerter ein für das jeweils eingestellte Performanzziel spezifischer Performanzwert für ein Steuern der Maschine mittels eines vom Steuerungsagenten ausgegebenen Steuersignals ermittelt wird, und
- der Steuerungsagent darauf trainiert wird, die ermittelten Performanzwerte zumindest im statistischen Mittel zu optimieren.

Durch das vorstehende Training kann der Steuerungsagent dazu befähigt werden, Steuersignale für die Maschine auszugeben, durch die ein jeweils einstellbares Performanzziel optimiert wird. In vielen Fällen ist dabei zu beobachten, dass ein so trainierter Steuerungsagent gute Interpolations- und Abstraktionseigenschaften aufweist. D.h. auch wenn beim Training nur wenige einzelne Performanzziele verwendet werden, so werden beim Steuern der Maschine auch Neukombinationen dieser Performanzziele häufig verhältnismäßig gut optimiert.

Nach einer weiteren vorteilhaften Ausführungsform der Erfindung kann die Vielzahl der Zieleinstellungswerte generiert werden, indem ein erster Zieleinstellungswert vielfach, vorzugsweise zufallsbasiert variiert wird, wobei eine statistische oder maximale Streubreite der Variationen durch eine vorgegebene Toleranzschwelle begrenzt wird. Der erste Zieleinstellungswert kann dann durch den die ermittelte übergeordnete Performanz optimierenden Zieleinstellungswert aktualisiert werden. Falls der erste Zieleinstellungswert vektorwertig ist, können die Variationen ebenfalls vektorwertig sein. Die Toleranzschwelle kann derart gewählt werden, dass sich einerseits die Variationen nicht oder zumindest nicht wesentlich auf die Steuerung der Maschine auswirken, und dass sich andererseits Gradienten nach dem Zieleinstellungswert numerisch noch hinreichend stabil ermitteln lassen.

Vorzugsweise kann eine jeweilige Variation durch einen Ablauf einer vorgegebenen Zeitspanne und/oder durch ein vorgegebenes Ereignis, z.B. eine Systemwarnung oder einen Alarm ausgelöst werden. Die Zeitspanne kann dabei so gewählt werden, dass die übergeordnete Performanz während dieser Zeitspanne hinreichend zuverlässig gemessen werden kann.

Nach einer vorteilhaften Ausführungsform der Erfindung kann zur Ermittlung des die übergeordnete Performanz optimierenden Zieleinstellungswerts ein Gradientenabstiegsverfahren verwendet werden. Hierbei kann auf eine Vielzahl effizienter Standardverfahren zurückgegriffen werden, die schnell zu einem optimalen Ergebnis konvergieren.

Weiterhin kann die übergeordnete Performanz durch einen übergeordneten Performanzvektor mit mehreren Vektorelementen quantifiziert werden. In diesem Fall kann geprüft werden, ob eine Abstiegsrichtung für den Zieleinstellungswert existiert, entlang der mehrere Vektorelemente des übergeordneten Performanzvektors gleichzeitig verbessert werden. Infolge eines positiven Prüfungsergebnisses kann dann der Zieleinstellungswert in Richtung dieser Abstiegsrichtung verschoben werden.

Gemäß einer vorteilhaften Weiterbildung der Erfindung können mehrere gleichartige Maschinen durch den trainierten Steuerungsagenten gesteuert werden. Dabei können für die verschiedenen Zieleinstellungswerte jeweils die übergeordnete Performanz jeder Maschine gemessen und diese Messungen über die Maschinen gemittelt werden. Damit kann ein die gemittelte übergeordnete Performanz optimierender Zieleinstellungswert ermittelt und im weiteren Betrieb der Maschinen verwendet werden. Auf diese Weise können Messungen der übergeordneten Performanz über mehrere Maschinen verteilt und damit gewissermaßen parallelisiert werden. Anhand der größeren Anzahl an Messungen können Korrelationen zwischen den Zieleinstellungswerten und der übergeordneten Performanz und damit auch der optimierende Zieleinstellungswert oft erheblich schneller und/oder zuverlässiger ermittelt werden als anhand einer einzigen Maschine.

Nach einer weiteren vorteilhaften Weiterbildung der Erfindung können mehrere gleichartige Maschinen durch den trainierten Steuerungsagenten gesteuert werden, wobei für jede Maschine jeweils ein deren übergeordnete Performanz optimierender Zieleinstellungswert ermittelt wird. Die ermittelten optimierenden Zieleinstellungswerte können dann gemittelt werden. Entsprechend kann der gemittelte optimierende Zieleinstellungswert im weiteren Betrieb der Maschinen verwendet werden. Auch bei dieser Verfahrensvariante kann der optimierende Zieleinstellungswert oft erheblich schneller und/oder zuverlässiger ermittelt werden als anhand einer einzigen Maschine.

Ein Ausführungsbeispiel der Erfindung wird nachfolgend anhand der Zeichnung näher erläutert. Dabei veranschaulichen jeweils in schematischer Darstellung:
Figur 1 eine lernbasierte Maschinensteuerung in einer Trainingsphase und
Figur 2 die Maschinensteuerung beim Steuern einer Maschine.

Insofern in verschiedenen Figuren gleiche oder korrespondierende Bezugszeichen verwendet werden, bezeichnen diese Bezugszeichen - sofern nicht anders angegeben - die gleichen oder korrespondierende Entitäten, die insbesondere wie im Zusammenhang mit der betreffenden Figur beschrieben, implementiert oder ausgestaltet sein können.

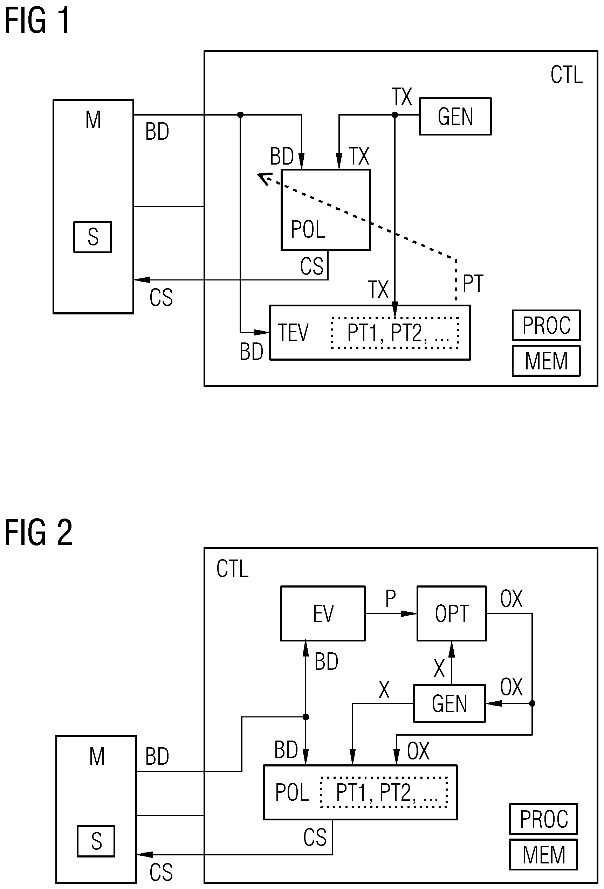

Die Figuren 1 und 2 veranschaulichen beispielhaft eine lernbasierte Maschinensteuerung CTL zum Steuern einer Maschine M. Die Maschinensteuerung CTL umfasst einen oder mehrere Prozessoren PROC zum Ausführen der beanspruchten Verfahrensschritte der Maschinensteuerung CTL sowie einen oder mehrere mit dem Prozessor PROC gekoppelte Speicher MEM zum Speichern der von der Maschinensteuerung CTL zu verarbeitenden Daten.

Die Maschinensteuerung CTL ist an die Maschine M gekoppelt, die im vorliegenden Ausführungsbeispiel als Roboter, z.B. als Fertigungsroboter ausgestaltet ist. Alternativ oder zusätzlich kann die Maschine M auch ein Motor, eine Fertigungsanlage, eine Fabrik, eine Werkzeugmaschine, eine Fräsmaschine, eine Gasturbine, eine Windturbine, eine Dampfturbine, ein chemischer Reaktor, eine Verbrennungskraftmaschine, eine Kühlanlage oder eine Heizungsanlage sein.

Die Maschine M verfügt über eine Sensorik S, die fortlaufend verschiedene aktuelle Betriebsparameter der Maschine M im laufenden Betrieb misst und als Zustandswerte ausgibt. Durch die Zustandswerte können insbesondere physikalische, regelungstechnische, chemische und/oder wirkungstechnische Zustandsgrößen, Sensordaten, Umgebungsdaten oder andere im Betrieb der Maschine M anfallende oder den Betrieb beeinflussende Betriebsparameter quantifiziert werden. Die Zustandsgrößen können dabei eine Temperatur, einen Druck, eine Einstellung, eine Aktorstellung, eine Ventilposition, eine Schadstoffemission, eine Auslastung, einen Ressourcenverbrauch und/oder eine Leistung der Maschine M oder einer Komponente davon betreffen. Bei einer Fertigungsanlage oder einer Werkzeugmaschine können die Zustandswerte auch eine Produktqualität, eine Verarbeitungsqualität oder eine andere Produkteigenschaft betreffen. Bei einer Turbine können die Zustandswerte eine Turbinenleistung, eine Rotationsgeschwindigkeit, Vibrationsfrequenzen, Vibrationsamplituden, Verbrennungsdynamiken, Verbrennungswechseldruckamplituden oder Stickoxidkonzentrationen betreffen.

Die von der Sensorik S aktuell gemessenen Zustandswerte sowie gegebenenfalls anderweitig ermittelte aktuelle Betriebsparameter der Maschine M, wie z.B. Steuerdaten oder Umgebungsdaten werden fortlaufend in Form von Betriebsdaten BD von der Maschine M zur Maschinensteuerung CTL übermittelt. Die Betriebsdaten BD können dabei insbesondere durch Datenvektoren repräsentiert oder dargestellt werden.

Durch die Maschinensteuerung CTL werden aus den übermittelten Betriebsdaten BD fortlaufend Steuersignale CS zum Steuern der Maschine M abgeleitet und an diese übermittelt. Durch die übermittelten Steuersignale CS wird die Maschine M gesteuert.

Die Steuersignals CS werden mittels eines lernbasierten Steuerungsagenten POL des Maschinenlernmoduls CTL ermittelt. Der Steuerungsagent POL kann dabei insbesondere ein künstliches neuronales Netz umfassen.

Der Steuerungsagent POL wird in einer Trainingsphase darauf trainiert, anhand von Betriebsdaten der Maschine M Steuersignale für die Maschine M auszugeben, durch die ein einstellbares Performanzziel der Maschine M optimiert wird. Ein jeweiliges Performanzziel, hinsichtlich dessen die Steuerung der Maschine M zu optimieren ist, wird dabei durch einen in den Steuerungsagenten einzuspeisenden Zieleinstellungswert eingestellt. Unter einer Optimierung sei auch eine gezielte Annäherung an ein Optimum verstanden.

Als Performanzziele können beispielsweise ein möglichst hoher Wirkungsgrad, eine möglichst hohe Leistung, ein möglichst hoher Ertrag, eine möglichst hohe Geschwindigkeit, eine möglichst hohe Präzision, eine möglichst hohe Effizienz, eine möglichst hohe Stabilität, eine möglichst hohe Lebensdauer, ein möglichst geringer Schadstoffausstoß, eine möglichst geringe Laufzeit, eine möglichst geringe Fehlerrate, ein möglichst geringer Ressourcenverbrauch oder ein möglichst geringer Verschleiß der Maschine M vorgesehen sein.

Für das vorliegende Ausführungsbeispiel sei angenommen, dass der Zieleinstellungswert vektorwertig mit quasikontinuierlich belegbaren Vektorelementen ist. Jedes Vektorelement ist hierbei einem vorgegebenen Performanzziel zugeordnet, um dieses relativ zu den anderen Performanzzielen zu gewichten. Auf diese Weise kann mittels des Zieleinstellungswerts zwischen mehreren vorgegebenen Performanzzielen quasikontinuierlich interpoliert werden, um ein in einer spezifischen Betriebssituation günstiges Performanzziel feingranular einzustellen. Die quasikontiuierliche Einstellbarkeit des Performanzziels erlaubt die Verwendung von gradientenbasierten Optimierungsverfahren zur Ermittlung eines optimierten, ggf. interpolierten Performanzziels.

Das Training des lernbasierten Steuerungsagenten POL wird nachfolgend anhand von Figur 1 näher erläutert.

Unter einem Training sei allgemein eine Optimierung einer Abbildung von Eingabedaten eines Maschinenlernmoduls, hier des Steuerungsagenten POL, auf dessen Ausgabedaten verstanden. Diese Abbildung wird nach vorgegebenen Kriterien während einer Trainingsphase optimiert. Als Kriterium kann insbesondere bei Steuermodellen eine durch Steueraktionen induzierte Performanz oder bei Prädiktionsmodellen ein Prädiktionsfehler herangezogen werden. Durch das Training können beispielsweise Vernetzungsstrukturen von Neuronen eines neuronalen Netzes, Gewichte von Verbindungen zwischen den Neuronen oder andere Einstellparameter des Maschinenlernmoduls so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren. Trainieren lassen sich so insbesondere künstliche neuronale Netze, rekurrente neuronale Netze, faltende neuronale Netze, Perzeptrone, bayessche neuronale Netze, Autoencoder, variationale Autoencoder, Gaußprozesse, Deep-Learning-Architekturen, Support-Vektor-Maschinen, datengetriebene Regressionsmodelle, K-nächste-Nachbarn-Klassifikatoren, physikalische Modelle oder Entscheidungsbäume.

Im vorliegenden Fall soll der Steuerungsagent POL - wie oben schon angedeutet - darauf trainiert werden, bei Einspeisung von Betriebsdaten der Maschine M sowie eines jeweiligen Zieleinstellungswerts ein hinsichtlich des durch den jeweiligen Zieleinstellungswert eingestellten Performanzziels optimiertes Steuersignal auszugeben.

Hierzu verfügt die Maschinensteuerung CTL über einen ersten Performanzbewerter TEV, der durch Eingabe von Zieleinstellungswerten auf eine Vielzahl verschiedener Performanzziele einstellbar ist. Der erste Performanzbewerter TEV dient dem Zweck, anhand von Betriebsdaten der Maschine M einen für ein jeweils eingestelltes Performanzziel spezifischen Performanzwert für die Maschine M zu ermitteln.

So kann der erste Performanzbewerter TEV beispielsweise durch den Zieleinstellungswert zunächst auf die Ermittlung eines Wirkungsgrads der Maschine M als Performanzziel eingestellt werden, um anhand der Betriebsdaten, z.B. anhand von Leistungsmesswerten, einen aktuellen Wirkungsgrad der Maschine M zu ermitteln. Anschließend kann der erste Performanzbewerter TEV beispielsweise auf die Ermittlung eines Schadstoffausstoßes der Maschine eingestellt werden, um anhand von Betriebsdaten, z.B. anhand von Emissionsmesswerten, einen aktuellen Schadstoffausstoß der Maschine M zu bestimmen.

Zum Training des Steuerungsagenten POL werden durch einen Generator GEN der Maschinensteuerung CTL eine Vielzahl verschiedener vektorwertiger Trainings-Zieleinstellungswerte TX generiert, durch die eine Vielzahl unterschiedlicher Performanzziele PT1, PT2, ... eingestellt werden können.

Weiterhin werden fortlaufend aktuelle Betriebsdaten BD der Maschine M zusammen mit einem jeweiligen Trainings-Zieleinstellungswert TX als Eingabedaten in eine Eingabeschicht des Steuerungsagenten POL eingespeist. Parallel dazu wird der jeweilige Trainings-Zieleinstellungswert TX in den ersten Performanzbewerter TEV eingespeist, um diesen auf ein jeweiliges Performanzziel PT1 bzw. PT2, ... einzustellen. Darüber hinaus werden die Betriebsdaten BD auch fortlaufend zum ersten Performanzbewerter TEV übertragen.

Der Steuerungsagent POL leitet aus den eingespeisten Betriebsdaten BD und dem jeweiligen Trainings-Zieleinstellungswert TX ein Steuersignal CS ab, mittels dessen die Maschine M gesteuert wird. Parallel dazu ermittelt der erste Performanzbewerter TEV anhand der aktuellen Betriebsdaten BD einen hinsichtlich des aktuell eingestellten Performanzziels PT1 bzw. PT2, ... spezifischen Performanzwert PT. Letzterer quantifiziert wie sich die aktuelle Steuerung der Maschine M mittels des Steuersignals CS auf das jeweils eingestellte Performanzziel PT1 bzw. PT2, ... auswirkt. Alternativ oder zusätzlich können die performanzielspezifischen Performanzwerte PT durch den ersten Performanzbewerter TEV auch mittels einer Simulation der Maschine M oder anhand von gespeicherten Betriebsdaten und Steuerdaten der Maschine M ermittelt werden.

Die vorstehende Prozedur wird für jeden der generierten Trainings-Zieleinstellungswerte TX mit jeweiligen Betriebsdaten BD ausgeführt.

Die ermittelten performanzielspezifischen Performanzwerte PT werden - wie in Figur 1 durch einen strichlierten Pfeil angedeutet - vom ersten Performanzbewerter TEV zum Steuerungsagenten POL zurückgeführt. Anhand der zurückgeführten Performanzwerte PT wird der Steuerungsagent POL darauf trainiert, die Performanzwerte PT zumindest im statistischen Mittel zu optimieren, insbesondere zu maximieren. D.h. Einstellparameter des Steuerungsagenten POL werden so eingestellt, dass die Performanzwerte PT über alle Performanzziele PT1, PT2, ... hinweg optimiert werden. Zum Durchführen einer solchen Optimierung ist eine Vielzahl von effizienten Optimierungsverfahren, insbesondere Verfahren des bestärkenden Lernens verfügbar. Ein besonders effizientes Verfahren wird beispielsweise in der Publikation "Learning Control Policies for Variable Objectives from Offline Data", von M. Weber, P. Swazinna, D. Hein, S. Udluft und V. Sterzing, arXiv:2308.06127v1 [cs.LG], vom 11 August 2023, beschrieben.

Infolge der Einspeisung eines jeweiligen Trainings-Zieleinstellungswerts TX in den Steuerungsagenten POL und die parallele Einstellung des korrespondierenden Performanzziels PT1 bzw. PT2, ... im ersten Performanzbewerter TEV wird der Steuerungsagent POL durch das Training dazu befähigt, die Steuersignale CS hinsichtlich des zum jeweils eingespeisten Trainings-Zieleinstellungswert TX korrespondierenden Performanzziels PT1 bzw. PT2, ... zu optimieren. Dabei erweist sich in vielen Fällen, dass ein so trainierter Steuerungsagent, hier POL, über gute Interpolations- und Abstraktionseigenschaften verfügt. D.h. auch wenn beim Training nur wenige einzelne Performanzziele verwendet werden, so werden beim Steuern der Maschine M durch den trainierten Steuerungsagenten POL auch Neukombinationen dieser Performanzziele in der Regel verhältnismäßig gut optimiert.

Figur 2 veranschaulicht die Maschinensteuerung CTL mit dem trainierten Steuerungsagenten POL beim Steuern der Maschine M. Die Maschinensteuerung CTL soll dabei im laufenden Betrieb der Maschine M an sich ändernde Betriebs- oder Umgebungsbedingungen angepasst werden können.

Zu diesem Zweck werden fortlaufend aktuelle Betriebsdaten BD der Maschine M als Eingabedaten in die Eingabeschicht des trainierten Steuerungsagenten POL eingespeist. Parallel dazu werden die Betriebsdaten BD auch fortlaufend in einen zweiten Performanzbewerter EV der Maschinensteuerung CTL eingespeist. Der zweite Performanzbewerter EV dient dem Zweck, anhand der eingespeisten Betriebsdaten BD fortlaufend eine den einzelnen Performanzzielen PT1, PT2, ... übergeordnete Performanz der Maschine M zu messen.

Die übergeordnete Performanz kann dabei insbesondere Betriebsbedingungen, Betriebszustände und/oder Performanzziele betreffen, die beim Training des Steuerungsagenten POL noch nicht relevant oder nicht zugänglich waren. Für das vorliegende Ausführungsbeispiel sei angenommen, dass die übergeordnete Performanz mehrere übergeordnete Performanzaspekte betrifft, z.B. eine Materialbeanspruchung und einen Gesamtschadstoffausstoß. Dabei können durch zweiten Performanzbewerter EV insbesondere Häufigkeiten oder Wahrscheinlichkeiten von Grenzwertüberschreitungen bei der Materialbeanspruchung und beim Gesamtschadstoffausstoß ermittelt werden. Entsprechend wird eine aktuell ermittelte übergeordnete Performanz jeweils durch einen übergeordneten Performanzvektor P mit mehreren Vektorelementen dargestellt und quantifiziert. Die übergeordneten Performanzvektoren P werden vom zweiten Performanzbewerter EV fortlaufend anhand der eingespeisten Betriebsdaten BD ermittelt und ausgegeben.

Weiterhin wird durch den Generator GEN eine Vielzahl verschiedener vektorwertiger Zieleinstellungswerte X zum Einstellen einer Vielzahl verschiedener Performanzziele PT1, PT2, ... generiert. Die Vektorelemente eines jeweiligen Zieleinstellungswerts X sind dabei quasikontinuierlich belegbar. Wie oben schon erwähnt, kann der trainierte Steuerungsagent POL durch einen jeweiligen Zieleinstellungswert X dazu veranlasst werden, ein hinsichtlich des jeweils eingestellten Performanzziels PT1 bzw. PT2, ... optimiertes Steuersignal CS auszugeben.

Im vorliegenden Ausführungsbeispiel werden die Zieleinstellungswerte X generiert, indem ein erster vektorwertiger Zieleinstellungswert X1 durch Zufallsvektoren V variiert wird. Der erste Zieleinstellungswert X1 kann dabei zu Beginn des Verfahrens mit einem als zuverlässig bekannten Vektor initialisiert werden. Die Zufallsvektoren V werden durch den Generator GEN zufallsverteilt, vorzugsweise gemäß einer Gaussverteilung mit Mittelwert Null und vorgegebener Streubreite generiert. Die Streubreite wird vorzugsweise so gewählt, dass sich einerseits die Variationen nicht wesentlich auf die Steuerung der Maschine auswirken, und dass sich andererseits Gradienten nach dem Zieleinstellungswert noch hinreichend stabil ermitteln lassen.

Konkret werden die Zieleinstellungswerte X im vorliegenden Ausführungsbeispiel erzeugt, indem ein jeweils generierter Zufallsvektor V zunächst zum ersten Zieleinstellungswert X1 hinzuaddiert wird, um X = X1+V zu erhalten. Der erhaltene Zieleinstellungswert X bleibt dann über eine vorgegebene Zeitspanne T konstant, nach deren Ablauf derselbe Zufallsvektor V vom ersten Zieleinstellungsvektor X1 subtrahiert wird, um den Zieleinstellungswert X auf X1-V zu setzen. Nach erneutem Ablauf der vorgegebenen Zeitspanne T wird dann ein neuer Zufallsvektor V zufallsbasiert generiert. Die Zeitspanne T kann dabei so gewählt werden, dass die übergeordnete Performanz während dieser Zeitspanne T hinreichend genau ermittelt werden kann. Alternativ oder zusätzlich kann eine jeweilige Änderung des Zieleinstellungswerts X durch ein vorgegebenes Ereignis ausgelöst werden.

Die vorstehenden Schritte der Erzeugung eines Zufallsvektors V sowie dessen Addition und Subtraktion zum ersten Zieleinstellungswert X1 werden fortlaufend iteriert, um die Vielzahl verschiedener Zieleinstellungswerte X zu erzeugen.

Die oben beschriebenen Verfahrensweisen zur Generierung der Zieleinstellungswerte X können vom Generator GEN auch zur Generierung der Trainings-Zieleinstellungswerte TX verwendet werden.

Die vom Generator GEN generierten Zieleinstellungswerte X werden zusammen mit den jeweils aktuellen Betriebsdaten BD als Eingabedaten in die Eingabeschicht des trainierten Steuerungsagenten POL eingespeist. Durch die variierten Zieleinstellungswerte X wird der trainierte Steuerungsagent POL, wie oben beschrieben, nach jedem Ablauf der Zeitspanne T auf geringfügig veränderte Performanzziele PT1, PT2, ... eingestellt. Entsprechend leitet der trainierte Steuerungsagent POL anhand der aktuellen Betriebsdaten BD fortlaufend Steuersignale CS ab, die hinsichtlich eines jeweils eingestellten Performanzziels PT1, PT2, ... optimiert sind. Die performanzzielspezifisch optimierten Steuersignale CS werden vom trainierten Steuerungsagenten POL fortlaufend an die Maschine M übermittelt, um diese zu steuern.

Zur Optimierung der übergeordneten Performanz verfügt die Maschinensteuerung CTL weiterhin über einen Optimierer OPT. In den Optimierer OPT werden die vom Generator GEN erzeugten Zieleinstellungswerte X sowie die übergeordneten Performanzvektoren P, die jeweils unter dem Einfluss eines jeweiligen Zieleinstellungswerts X gemessen wurden, eingespeist. Die Performanzvektoren P werden dazu vom zweiten Performanzbewerter EV zum Optimierer OPT übermittelt.

Anhand der übergeordneten Performanzvektoren P und der Zieleinstellungswerte X ermittelt der Optimierer OPT einen Zieleinstellungswert OX, der die übergeordneten Performanzvektoren P und damit die übergeordnete Performanz optimiert.

Zu diesem Zweck führt der Optimierer OPT ein Gradientenabstiegsverfahren aus. Hierbei werden Gradienten der übergeordneten Performanzvektoren P nach dem, hier vektorwertigen, Zieleinstellungswert X ermittelt. Insofern die Zieleinstellungswerte X wie oben beschrieben variiert werden, können die Gradienten numerisch durch Bildung von Differenzenquotienten berechnet werden. Die ermittelten Gradienten werden zu einer Jacobi-Matrix J zusammengefasst gemäß Jₖₗ = ∂Pₖ/∂Xₗ, wobei Xᵢ die Vektorelemente von X und Pₖ die Vektorelemente von P bezeichnet.

Ausgehend davon wird derjenige Vektor a ermittelt, der die euklidische Norm des Vektors J^{T}*a = ${\sum }_{k = 1}^{n} {a}_{k} \partial {P}_{k} / \partial {X}_{l}$ unter den Nebenbedingungen aₖ>=0 und a₁+...+aₙ=1 minimiert, wobei J^{T} die zu J transponierte Matrix und aₖ, k=1,...,n die Vektorelemente von a bezeichnen. Der aus der Minimierung resultierende Vektor J^{T}*a gibt dann in der Regel eine Abstiegsrichtung für den vektorwertigen Zieleinstellungswert X an, entlang der mehrere Vektorelemente eines jeweiligen Performanzvektors P gleichzeitig verbessert werden. Ein entsprechendes Optimierungsverfahren wird beispielsweise in der Publikation "Multiple-Gradient Descent Algorithm (MGDA)" von Jean-Antoine Désidéri, [Research Report] RR-6953, 2009, inria-00389811v2 beschrieben.

Anhand der ermittelten Abstiegsrichtung kann aus einem vorliegenden Zieleinstellungswert X^{N} ein hinsichtlich der übergeordneten Performanz in der Regel verbesserter Zieleinstellungswert X^{N+1} ermittelt werden gemäß ${X}^{N + 1} = {X}^{N} - μ {\sum }_{k = 1}^{n} {a}_{k} \partial {P}_{k} \left({X}^{N}\right) / \partial {X}_{l}$, wobei µ einen vorgebbaren Dämpfungs- oder Gewichtungsfaktor bezeichnet. Vorzugsweise kann die rechte Seite dieser Gleichung vor ihrer Zuweisung zum neuen Zieleinstellungswert X^{N+1} daraufhin geprüft werden, ob sie sich innerhalb eines vorgegebenen Toleranzbereichs befindet. Falls dies zutrifft, wird X^{N+1} auf den Wert der rechten Seite gesetzt. Andernfalls kann µ verringert werden, oder es kann ein zulässiger Defaultwert zugewiesen werden.

Die vorstehende Verfahrensweise kann sukzessive wiederholt werden, bis eine resultierende Folge von Zieleinstellungswerten X^{N}, N=1,2,... ein vorgegebenes Konvergenzkriterium erfüllt.

Der resultierende Endwert der Folge wird dann vom Optimierer OPT als der die übergeordnete Performanz optimierende Zieleinstellungswert OX ausgegeben.

Der ausgegebene Zieleinstellungswert OX wird vom Optimierer OPT sowohl in die Eingabeschicht des trainierten Steuerungsagenten POL als auch in den Generator GEN eingespeist.

Der trainierte Steuerungsagent POL wird durch den Zieleinstellungswert OX dazu veranlasst, aus den Betriebsdaten BD Steuersignale CS abzuleiten, die hinsichtlich der übergeordneten Performanz optimiert sind. Entsprechend wird die Maschine M durch die erzeugten Steuersignale CS derart gesteuert, dass die übergeordnete Performanz optimiert wird.

Auf diese Weise kann die Steuerung der Maschine M im laufenden Betrieb an neue, beim Training des Steuerungsagenten POL noch nicht absehbare Performanzaspekte angepasst werden.

Darüber hinaus wird der Generator GEN durch die Einspeisung des Zieleinstellungswert OX dazu veranlasst, den ersten Zieleinstellungswert X1 zu aktualisieren. Dabei kann der erste Zieleinstellungswert X1 insbesondere durch den Zieleinstellungswert OX ersetzt werden, der dann als neuer erster Zieleinstellungswert X1 fungiert. In diesem Fall werden die nachfolgend erzeugten Zieleinstellungswerte X - wie oben beschrieben - als kleine Variationen des Zieleinstellungswerts OX generiert. Auf diese Weise können im laufenden optimierten Betrieb der Maschine M weiterhin Gradienten der übergeordneten Performanzvektoren P nach dem Zieleinstellungswert X ermittelt und zur fortlaufenden Adaption der Steuerung verwendet werden.

## Patentansprüche

1. Computerimplementiertes Verfahren zum Steuern einer Maschine (M), wobei
a) ein lernbasierter Steuerungsagent (POL) bereitgestellt wird, der darauf trainiert ist, infolge einer Einspeisung von Betriebsdaten (BD) der Maschine (M) sowie eines Zieleinstellungswerts (X) ein hinsichtlich eines Performanzziels (PT1, PT2, ...) der Maschine optimiertes Steuersignal (CS) zum Steuern der Maschine auszugeben, wobei durch den Zieleinstellungswert (X) eine Vielzahl verschiedener Performanzziele (PT1, PT2, ...) einstellbar sind,
b) eine Vielzahl verschiedener Zieleinstellungswerte (X) generiert wird,
c) aktuelle Betriebsdaten (BD) der Maschine erfasst und zusammen mit einem jeweiligen der generierten Zieleinstellungswerte (X) in den Steuerungsagenten (POL) eingespeist werden,
d) die Maschine mittels eines jeweils vom Steuerungsagenten (POL) ausgegebenen Steuersignals (CS) gesteuert wird,
e) für verschiedene Zieleinstellungswerte (X) jeweils eine den einzelnen Performanzzielen (PT1, PT2,...) übergeordnete Performanz der Maschine ermittelt wird, und
f) ein die übergeordnete Performanz optimierender Zieleinstellungswert (OX) ermittelt und in einem weiteren Betrieb der Maschine verwendet wird.

2. Verfahren nach Anspruch 1, **dadurch gekennzeichnet, dass**
der Steuerungsagent (POL) vorab trainiert wird, indem
- ein Performanzbewerter (TEV) bereitgestellt wird, bei dem verschiedene Performanzziele (PT1, PT2,...) der Maschine einstellbar sind,
- eine Vielzahl von Trainings-Zieleinstellungswerten (TX) generiert wird,
- Betriebsdaten (BD) der Maschine zusammen mit einem jeweiligen der Trainings-Zieleinstellungswerte (TX) in den Steuerungsagenten (POL) eingespeist werden, wobei parallel dazu durch den jeweiligen Trainings-Zieleinstellungswert (TX) ein jeweiliges Performanzziel (PT1, PT2, ...) beim Performanzbewerter (TEV) eingestellt wird,
- durch den Performanzbewerter (TEV) ein für das jeweils eingestellte Performanzziel (PT1, PT2, ...) spezifischer Performanzwert (PT) für ein Steuern der Maschine mittels eines vom Steuerungsagenten (POL) ausgegebenen Steuersignals (CS) ermittelt wird, und
- der Steuerungsagent (POL) darauf trainiert wird, die ermittelten Performanzwerte (PT) zu optimieren.

3. Verfahren nach einem der vorhergehenden Ansprüche, **dadurch gekennzeichnet, dass** die Vielzahl der Zieleinstellungswerte (X) generiert wird, indem ein erster Zieleinstellungswert (X1) vielfach variiert wird, wobei eine statistische oder maximale Streubreite der Variationen durch eine vorgegebene Toleranzschwelle begrenzt wird, und
dass der erste Zieleinstellungswert (X1) durch den die ermittelte übergeordnete Performanz optimierenden Zieleinstellungswert (OX) aktualisiert wird.

4. Verfahren nach Anspruch 3, **dadurch gekennzeichnet, dass**
eine jeweilige Variation durch einen Ablauf einer vorgegebenen Zeitspanne und/oder durch ein vorgegebenes Ereignis ausgelöst wird.

5. Verfahren nach einem der vorhergehenden Ansprüche, **dadurch gekennzeichnet, dass** zur Ermittlung des die übergeordnete Performanz optimierenden Zieleinstellungswerts (OX) ein Gradientenabstiegsverfahren verwendet wird.

6. Verfahren nach Anspruch 5, **dadurch gekennzeichnet,**
**dass** die übergeordnete Performanz durch einen übergeordneten Performanzvektor (P) mit mehreren Vektorelementen quantifiziert wird,
**dass** geprüft wird, ob eine Abstiegsrichtung für den Zieleinstellungswert (X) existiert, entlang der mehrere Vektorelemente des übergeordneten Performanzvektors (P) gleichzeitig verbessert werden, und
**dass** infolge eines positiven Prüfungsergebnisses der Zieleinstellungswert (X) in Richtung dieser Abstiegsrichtung verschoben wird.

7. Verfahren nach einem der vorhergehenden Ansprüche, **dadurch gekennzeichnet,**
**dass** mehrere gleichartige Maschinen durch den trainierten Steuerungsagenten (POL) gesteuert werden, wobei für die verschiedenen Zieleinstellungswerte (X) jeweils
- die übergeordnete Performanz jeder Maschine gemessen wird, und
- diese Messungen über die Maschinen gemittelt werden, und
**dass** ein die gemittelte übergeordnete Performanz optimierender Zieleinstellungswert (OX) ermittelt und im weiteren Betrieb der Maschinen verwendet wird.

8. Verfahren nach einem der vorhergehenden Ansprüche, **dadurch gekennzeichnet,**
**dass** mehrere gleichartige Maschinen durch den trainierten Steuerungsagenten (POL) gesteuert werden, wobei für jede Maschine jeweils ein deren übergeordnete Performanz optimierender Zieleinstellungswert (OX) ermittelt wird,
**dass** die ermittelten optimierenden Zieleinstellungswerte (OX) gemittelt werden, und
**dass** der gemittelte optimierende Zieleinstellungswert im weiteren Betrieb der Maschinen verwendet wird.

9. Maschinensteuerung (CTL), eingerichtet zum Ausführen aller Verfahrensschritte eines Verfahrens nach einem der vorhergehenden Ansprüche.

10. Computerprogrammprodukt umfassend Befehle, die bei der Ausführung des Programms durch einen Computer eine Maschinensteuerung nach Anspruch 9 dazu veranlassen, ein Verfahren nach einem der Ansprüche 1 bis 8 auszuführen.

11. Computerlesbares Speichermedium mit einem Computerprogrammprodukt nach Anspruch 10.
